# EUROPEAN PATENT SPECIFICATION

(11) **EP 3 048 162 B1**
(45) Date of publication and mention of the grant of the patent: **30.12.2020**
(21) Application number: 14846171.8
(22) Date of filing: 16.09.2014
(51) Int. Cl.: C10M 103/02, C10M 103/06, F16C 19/20, F16C 33/37, F16C 33/41, F16C 33/66, F16C 33/56, F16C 33/16

(54) **SOLID-LUBRICATION ROLLING BEARING**
FESTSCHMIERSTOFF UND DAMIT GESCHMIERTES WÄLZLAGER
LUBRIFIANT SOLIDE, ET PALIER À ROULEMENT À LUBRIFIANT SOLIDE

(30) Priority: 19.09.2013 JP 2013193699; 24.09.2013 JP 2013196465; 08.10.2013 JP 2013211008
(43) Date of publication of application: 27.07.2016
(73) Proprietor: NTN Corporation, Osaka-shi, Osaka 550-0003 (JP)
(72) Inventor: AIGA, Hisanori, Kuwana-shi Mie 511-8678 (JP); MANABE, Hiroki, Kuwana-shi Mie 511-8678 (JP); GOTOU, Takahiro, Ama-gun Aichi 497-8541 (JP); ITO, Yoshinori, Ama-gun Aichi 497-8541 (JP); SATOJI, Fuminori, Ama-gun Aichi 497-8541 (JP)
(74) Representative: Eder Schieschke & Partner mbB
(86) International application number: PCT/JP2014/074398
(87) International publication number: WO 2015/041205

(56) References cited:
- EP-A1- 1 790 867
- EP-A1- 2 537 801
- DE-A1- 4 041 068
- JP-A- S6 265 915
- JP-A- S6 265 915
- JP-A- S6 295 332
- JP-A- 2001 221 235
- JP-A- 2004 224 982
- JP-A- 2013 079 715
- US-A- 5 118 207

## Description

### TECHNICAL FIELD

The present invention relates to a solid-lubrication rolling bearing.

### BACKGROUND ART

A solid-lubrication rolling bearing using a solid lubricant is suitable for use at elevated temperatures or in a vacuum, which prevents use of grease or lubricating oil as a lubricant, for example, for use as a tenter clip bearing of a film stretching machine.

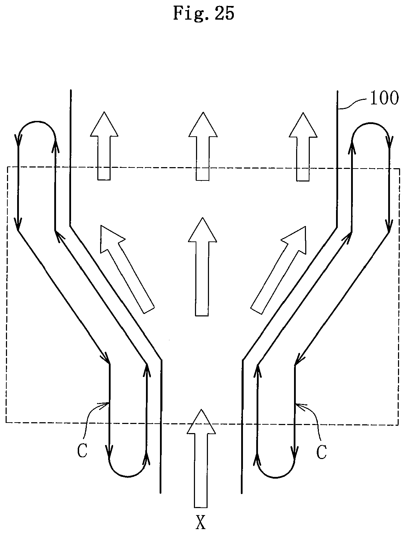

The film stretching machine herein is a machine for manufacturing a stretched film used in general packaging materials, liquid crystal panels, or secondary batteries. To improve the strength of the film, as illustrated in Fig. 25, the film stretching machine continuously transfers a film 100 in a longitudinal direction (direction of an arrow X), and stretches the film 100 in its width direction in a region expressed by a broken line while heating the film 100 (potentially, further stretches the film 100 in its longitudinal direction). The tenter clip is a mechanical component in the film stretching machine, which clips both ends of the film, and stably circulates along a caterpillar guide rail as illustrated by an arrow C in this figure to stretch the film in a predetermined direction. The tenter clip bearing is used in a portion that guides travelling of the tenter clip along the rail at elevated temperatures (250°C or higher, and about 400°C at maximum). Therefore, it is necessary to use the solid-lubrication rolling bearing.

Patent literature 1 discloses, as the solid lubricant used in the solid-lubrication rolling bearing, a solid lubricant that is a sintered compact including graphite and a binder, the sintered compact having a combination ratio of graphite of 80 to 98 vol%, a bending strength of 4 to 15 MPa, and a specific wear rate of 1.5 to 2.5 x 10-5 mm³/(N • m).

Patent literature 2 relates to a cage for ball-bearings which is made from a fiber-reinforced material obtained. by crosslinking a polyphenylene sulphide (PPS) resin of melt viscosity 35-300 Pa.s, the material also containing an F-containing. resin.

Patent literature 3 relates to rolling bearing cages which are prepared from compositions comprising an aromatic polyamide which comprises terephthalic acid constituent units, aromatic dicarboxylic acid constituent units other than terephthalic acid constituent units and straight-chain aliphatic alkylenediamine constituent units, and glass fibers.

Patent literature 4 relates to a bearing retainer made of a resin composition comprising a polyamide resin which has two different repeating units.

Patent literature 5 relates to a carbonaceous sliding material which is a molded material containing fine carbonaceous particles as the aggregate, wherein 0.5-5wt% expanded graphite is further incorporated into the molded material, wherein the expanded graphite is obtained by oxidizing natural scaly graphite in a wet process, heating the graphite at high temp. to expand the graphite, then temporarily cracking the graphite and then granulating the cracked material.

### CITATION LIST

### PATENT LITERATURE

Patent literature 1: Japanese Unexamined Patent Application Publication No. 2013-79715
Patent literature 2: DE 40 41 068 A1
Patent literature 3: US 5 118 207 A
Patent literature 4: EP 1 790 867 A1
Patent literature 5: JP S62 65915 A

### SUMMARY OF THE INVENTION

### TECHNICAL PROBLEMS

However, the solid lubricant described in Patent literature 1 includes graphite as a main ingredient, and the binder are not combined with graphite particles after firing, resulting in low material strength and hardness. This disadvantageously leads to lack of impact resistance and wear resistance, and shortened life of the rolling bearing.

Thus, an object of the present invention is to provide a solid-lubrication rolling bearing comprising a solid lubricant having high material strength and hardness as well as excellent impact resistance and wear resistance.

### SOLUTION TO PROBLEMS

The solid lubricant of the solid-lubrication rolling bearing according to the present invention is formed by molding and firing powder that includes amorphous and self-sintering carbon material powder, graphite powder, and a binder.

The carbon material powder used according to the present invention is different from crystalline graphite due to its amorphous property, and is different from non self-sintering carbon fiber due to its self-sintering property. Examples of the amorphous and self-sintering carbon material powder include pitch powder and coke powder. Such carbon material powder is hardened by firing, and forms a skeleton structure in which adjacent carbon material particles are combined with each other after firing due to the self-sintering property. The graphite particles are held by the skeleton structure and thus, are hard to fall off. This can increase material strength and improve impact resistance and wear resistance.

To attain the above effects, a combination ratio of the carbon material powder is preferably larger than a combination ratio of the graphite powder in weight ratio. In this case, a green compact containing the carbon material powder of 50 to 60 wt% and, graphite powder of 25 to 40 wt% can be used.

Both of the carbon material powder and the graphite powder are small powder, and have a low apparent density and a low fluidity. Thus, they cannot smoothly fill a forming die. To counteract this, preferably, the carbon material powder and the graphite powder are granulated using a binder, and a green compact is molded using the granulated powder.

At elevated temperatures, the lubricity of graphite lowers due to a decrease in moisture to decrease the wear resistance of the solid lubricant. However, the decrease in the wear resistance can be compensated by adding at least one of W, Mo, and MoS₂ to the solid lubricant.

The wear resistance can be further improved by adding carbon fiber or carbon nanotube to the solid lubricant.

In the solid lubricant, the bending strength can be set to 40 to 100 MPa, and the Shore hardness (HSC) can be set to 50 to 100. The specific wear rate of the solid lubricant can be set to 1.0 to 2.5 x 10-7 mm³/(N•m). The density of the solid lubricant can be set to 1.0 to 3.0 g/cm³.

The solid-lubrication rolling bearing according to the present invention is presented by the features of patent claim 1.

With such configuration, a moving range of each rolling element in the circumferential direction may be restricted by restricting members. For this reason, even when the separator becomes smaller due to wear caused by the operation of the bearing, all of the rolling elements are prevented from being unevenly distributed in a partial circumferential region. Thus, the outer ring is not separated from the inner ring even after long-term operation, preventing unintended disassembling of the bearing.

Since the restricting members can individually move, the size of a gap between the rolling element and an inner side face of the restricting member can be flexibly changed. For this reason, discharging the solid lubricant powder accumulated in the gap can be promoted, preventing the gap from being filled with the solid lubricant powder to cause rotational locking. Since the restricting members are not connected to each other with a connecting member such as a rivet, there is no need to ensure a set-up space for the connecting member in the bearing in the circumferential direction. Thus, many rolling elements can be assembled in the bearing to increase a basic rated load of the bearing. Moreover, the operation of connecting the restricting members to each other becomes unnecessary, reducing man-hour at assembling of the bearing.

To attain the above effects, preferably, each of the restricting members is provided with a bottom portion extending between the outer ring and the inner ring in the circumferential direction, and a restricting portion extending from the bottom portion in a space between the inner raceway face and the outer raceway face.

In this case, an inner side face of each of the bottom portion and the restricting portion can be formed of a flat face having no curvature, further promoting discharging of the solid lubricant through the gap.

A sealing member that seals the space between the inner ring and the outer ring can be disposed on the axial outer side of the bottom portion of the restricting member, preventing the restricting member from falling off.

By making an outer diameter end and an inner diameter end of the bottom portion close to an inner circumferential face of the outer ring and an inner ring of the outer circumferential face, the bottom portion can keep generated solid lubricant powder around the raceway face. Thus, leakage of the solid lubricant powder to the outside of the bearing can be suppressed.

In the solid-lubrication rolling bearing, a pair of the restricting members may be disposed on both axial sides of the rolling element and the separator, the pair of restricting members, and the rolling element and the separator that are accommodated within the restricting members are regarded as one unit, and the units are disposed at a plurality of places in the circumferential direction to allow relative movement between the units, thereby preventing leakage of the solid lubricant powder to the outside of the bearing more reliably.

A solid-lubrication rolling bearing according to the present invention includes an outer ring having an outer raceway face, an inner ring having an inner raceway face, a plurality of rolling elements disposed between the outer raceway face and the inner raceway face, and a separator disposed between the adjacent rolling elements to allow contact between the adjacent rolling elements, the separator being formed of the solid lubricant.

With such configuration, when the adjacent rolling elements get close to each other, the rolling elements contact each other, avoiding collision of the rolling elements with the separator. This can reduce an impact load exerted on the separator and prevent a damage on the separator due to shock.

In this case, when the rolling elements are disposed as full complement rolling elements, even if the separator becomes thin due to wear, all of the rolling elements can be prevented from being unevenly distributed in a partial circumferential region (especially, a region of not more than 180 degrees in the circumferential direction). For this reason, the outer ring is not separated from the inner ring even after long-term operation, preventing unintended disassembling of the bearing. Further, since many rolling elements are assembled in the bearing, the basic rated load of the bearing can be increased.

Preferably, the separator has receiving faces on both circumferential sides, the receiving faces capable of contacting the respective rolling elements, and an opening opened to the both receiving faces, and the adjacent rolling elements are brought into contact with each other via the opening. With such configuration, during operation of the bearing, the rolling elements contact the receiving faces and shave the receiving faces to generate solid lubricant powder, lubricating the bearing. Meanwhile, when the adjacent rolling elements get close to each other, the rolling element contact each other via the opening, preventing the rolling elements from strongly colliding with the receiving faces. This can prevent a damage on the separator due to impact.

The receiving faces of the separator are formed to make surface-contact with the rolling elements, stabilizing the position and posture of the separator during operation of the bearing to prevent the occurrence of noises caused by oscillation of the separator.

The above-mentioned solid-lubrication rolling bearing is especially suitable as a tenter clip bearing in a film stretching machine.

### ADVANTAGEOUS EFFECTS OF INVENTION

The present invention can provide a solid-lubrication rolling bearing comprising a solid lubricant having high material strength and hardness as well as excellent impact resistance and wear resistance.

### BRIEF DESCRIPTION OF THE DRAWINGS

Fig. 1 is a view illustrating microstructure of a solid lubricant which is used in a solid-lubrication rolling bearing according to the present invention.
Fig. 2 is a sectional view illustrating configuration of granulated powder used in a manufacturing process of the solid lubricant.
Fig. 3 is a view illustrating microstructure of a conventional solid lubricant.
Fig. 4 is a perspective view illustrating schematic structure of a tenter clip.
Fig. 5 is a front view illustrating a solid-lubrication rolling bearing (first embodiment).
Fig. 6 is a sectional view illustrating the solid-lubrication rolling bearing (first embodiment).
Fig. 7 is a sectional view illustrating a solid-lubrication rolling bearing (second embodiment).
Fig. 8 is a front view illustrating a solid-lubrication rolling bearing (second embodiment).
Fig. 9 is a partial exploded view illustrating the solid-lubrication rolling bearing in Fig. 8 when viewed from the outer diameter side, with an outer ring being removed.
Fig. 10 is a perspective view illustrating a restricting member.
Fig. 11 is a sectional view illustrating a solid-lubrication rolling bearing (third embodiment).
Fig. 12 is a front view illustrating the solid-lubrication rolling bearing (third embodiment).
Fig. 13 is a partial exploded view illustrating the solid-lubrication rolling bearing in Fig. 12 when viewed from the outer diameter side, with an outer ring being removed.
Fig. 14a is a front view illustrating a separator when viewed in the axial direction.
Fig. 14b is a plan view illustrating the separator when viewed in the radial direction.
Fig. 15 is an axial sectional view illustrating a solid-lubrication rolling bearing (fourth embodiment).
Fig. 16 is a sectional view illustrating the solid-lubrication rolling bearing (fourth embodiment) taken along the radial direction.
Fig. 17a is a perspective view illustrating a separator used in the solid-lubrication rolling bearing in Fig. 16.
Fig. 17b is a view illustrating the separator when viewed from a B direction in Fig. 17a.
Fig. 17c is a view illustrating the separator when viewed from a C direction in Fig. 17a.
Fig. 18 is a sectional view taken along A-A in Fig. 17a.
Fig. 19 is an axial sectional view illustrating a solid-lubrication rolling bearing (fifth embodiment).
Fig. 20 is a partial exploded view illustrating the solid-lubrication rolling bearing in Fig. 19 when viewed from the outer diameter side, with an outer ring being removed.
Fig. 21 is an axial sectional view illustrating a solid-lubrication rolling bearing (sixth embodiment).
Fig. 22 is a partial exploded view illustrating the solid-lubrication rolling bearing in Fig. 21 when viewed from the outer diameter side, with an outer ring being removed.
Fig. 23 is a perspective view illustrating a separator used in the solid-lubrication rolling bearing in Fig. 22.
Fig. 24 is a front view illustrating rolling elements disposed in a full complement rolling element mode.
Fig. 25 is a plan view illustrating schematic configuration of a film stretching machine.

### DESCRIPTION OF EMBODIMENTS

Embodiments of the present invention will be described below.

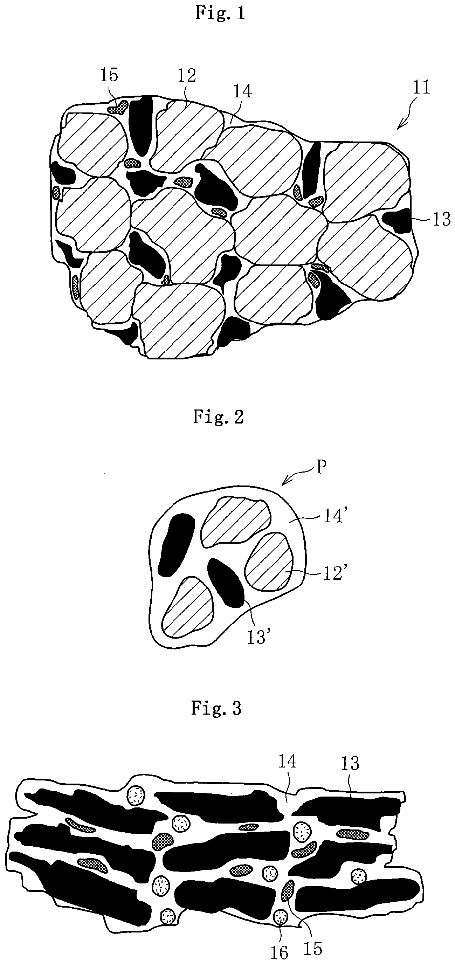

Fig. 1 illustrates enlarged microstructure of a solid lubricant which is used in a solid-lubrication rolling bearing according to the present invention.

As illustrated in this figure, a solid lubricant 11 is a porous body containing carbon material particles 12, graphite particles 13, a binder component 14 between the particles 12, 13, and pores 15. The carbon material particles 12 form skeleton structure in which the adjacent carbon material particles 12 are combined with each other. The binder component 14 and the graphite particles 13 are held in the skeleton structure of the carbon material particles 12.

The solid lubricant 11 is formed by filling a forming die with powder that includes carbon material powder, graphite powder, and a binder to mold the powder into predetermined shape, and then, removing the molded product from the forming die and firing it.

According to the present invention, amorphous and self-sintering (ability to be sintered by itself) carbon material powder is used as the carbon material powder. The carbon material powder is different from crystalline graphite powder due to its amorphous property, and is different from non self-sintering carbon fiber due to its self-sintering property. Examples of the carbon material powder include coke powder and pitch powder. Both of petroleum pitch powder and coal pitch powder can be used as the pitch powder.

Both of natural graphite powder and artificial graphite powder can be used as the graphite powder. The natural graphite powder is squamous and has excellent lubricity. The artificial graphite powder has excellent moldability. Accordingly, the natural graphite powder or the artificial graphite powder is selected according to required characteristics. The graphite powder is crystalline before and after firing. For example, phenol resin can be used as the binder.

The above-mentioned carbon material powder and graphite powder are granulated by adding the binder. Thereby, as illustrated in Fig. 2, granulated powder P in which carbon material powder 12' and graphite powder 13' are held by a binder 14' is manufactured. The carbon material powder 12' and the graphite powder 13' are fine powder and have poor fluidity, and thus, cannot smoothly fill the forming die. For this reason, they are granulated. The granulated powder P having a particle size of 600 µm or less (average particle diameter of 100 µm to 300µm) is selected by pulverizing and filtering the granulated powder P.

The granulated powder thus obtained is supplied to the forming die, and is pressed to mold a green compact. At this time, for the ratio (weight ratio) of the carbon material powder 12', the graphite powder 13', and the binder 14' in the green compact, the ratio of the carbon material powder 12' is the highest, and the ratio of the binder 14' is the lowest. Specifically, the carbon material powder 12' of 50 to 60 wt% and the graphite powder 13' of 25 to 40 wt% are contained, and the remainder is occupied by binder 14' and inevitable impurities.

Then, by firing the green compact, the solid lubricant illustrated in Fig. 1 can be manufactured. The firing is performed using inert gas such as nitrogen gas as atmospheric gas at temperatures of 900°C to 1000°C in an oven. Through the firing, the carbon material powder 12' becomes the amorphous carbon material particles 12, and the graphite powder 13' becomes the crystalline graphite particles 13. The binder 14' becomes the binder component 14 that is amorphous carbon. Preferably, the density of the sintered solid lubricant 11 is 1.0 to 3.0 g/cm³. When the density falls below the lower limit, a crack tends to occur, and when the density exceeds the upper limit, variation in size at molding (especially, variation in size in the compressing direction) becomes large.

Fig. 3 illustrates microstructure of a solid lubricant containing graphite as a main component in Patent literature 1. As illustrated in this figure, in the conventional solid lubricant, the graphite particles 13 are independent and are not combined with each other. The binder component 14 only holds the graphite particles 13, and is not combined with the graphite particles 13. Thus, the material strength is low, and the graphite particles tend to fall off. A reference numeral 16 in Fig. 3 denotes an additive such as tungsten.

On the contrary, in the solid lubricant 11 of the present invention, the carbon material particles 12 function as a base material, and are combined with each other to form the skeleton structure. The binder component 14 is amorphous and self-sintering, and thus, is combined with the carbon material particles 12. Moreover, since the sintered carbon material particles 12 are hard, the sintered solid lubricant 11 has high hardness. As a result, the solid lubricant 11 has high material strength and hardness. The graphite particles 13 hardly fall off. Therefore, the solid lubricant having high lubricity as well as excellent impact resistance and wear resistance can be obtained.

The hardness of the solid lubricant 11 of the present invention reaches a Shore hardness (HSC) of about 50 to 100, and is much higher that the hardness of the existing solid lubricant described in Patent literature 1 (Shore hardness HSC: about 10 to 15). Due to the hardness, the solid lubricant 11 of the present invention can be machined later. The bending strength of the solid lubricant 11 which may be used according to the present invention is 40 to 100MPa, which is higher than the bending strength of the existing solid lubricant a few to dozens of times. The specific wear rate of the solid lubricant 11 which may be used according to the present invention is 1.0 to 2.5 x 10-7 mm³/(N•m) and is one-hundredth of the specific wear rate of the existing solid lubricant. Thus, the life of the bearing can be extended by using the solid lubricant 11 which may be used according to the present invention as the solid lubricant disposed in the rolling bearing.

The skeleton structure of the carbon material particles 12 can be replaced with a skeleton structure in which metal particles such as Fe or Cu are combined with each other. However, this configuration tends to be fragile due to oxidation. At elevated temperatures, the material becomes soft, and both of material strength and hardness are lowered, which makes it difficult to be used as the solid lubricant. On the contrary, by adopting the skeleton structure of the carbon material particles 12 of the present invention, oxidation and softening of the material at elevated temperatures are hard to occur, thereby avoiding such trouble.

Other composites can be added to the solid lubricant 11 as necessary. For example, wear resistance can be improved by adding at least one of W, Mo, and MoS₂. This addition can compensate lowering of wear resistance, which is caused by lowering of lubricity of graphite at elevated temperatures. When the amount of added composites is too large, material strength decreases. Thus, a suitable amount is 1.0 vol% to 8.0 vol%.

To further improve wear resistance after firing, carbon fiber or carbon nanotube can be added to the solid lubricant 11. However, when the amount of the carbon fiber or carbon nanotube is too much, moldability degrades. Thus, a suitable amount is 10 wt% or less.

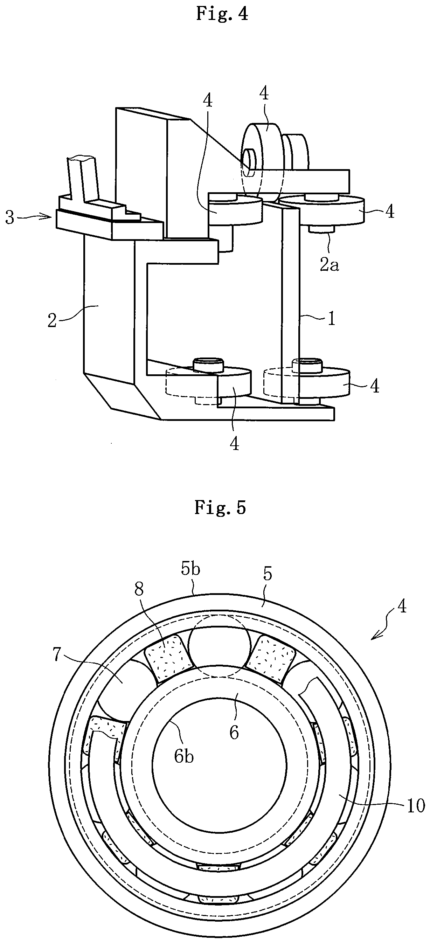

For example, the solid lubricant 11 is used for a rolling bearing for tenter clip of a film stretching machine. Fig. 4 illustrates schematic structure of the tenter clip of the film stretching machine. As described above, the tenter clip moves under guide of a caterpillar guide rail 1, and includes a frame 2, a clip 3 that clips a film 100 (See Fig. 25), and a plurality of bearings 4 rotatably supported by the frame 2. The tenter clip is driven by a chain not illustrated to travel. At this time, an outer circumferential face of each of the bearings 4 rolls on the guide rail 1, thereby moving the tenter clip along the guide rail 1 to stretch a film clipped by the clip 12. Another ring-like member engaged with an outer circumferential face of an outer ring of the bearing may roll on the guide rail 1.

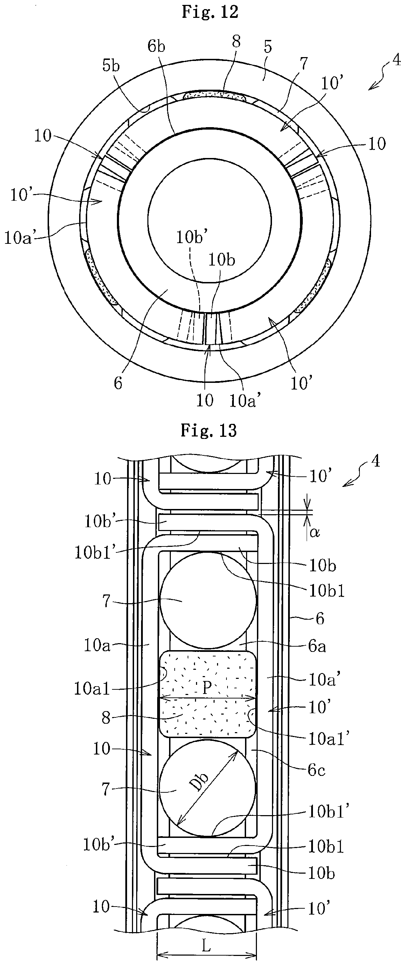

The solid lubricant 11 is suitable for use in a rolling bearing (solid-lubrication rolling bearing) according to the present invention. Solid-lubrication rolling bearings using the solid lubricant in accordance with first to sixth embodiments will be described below with reference to Fig. 5 to Fig. 24.

### [FIRST EMBODIMENT]

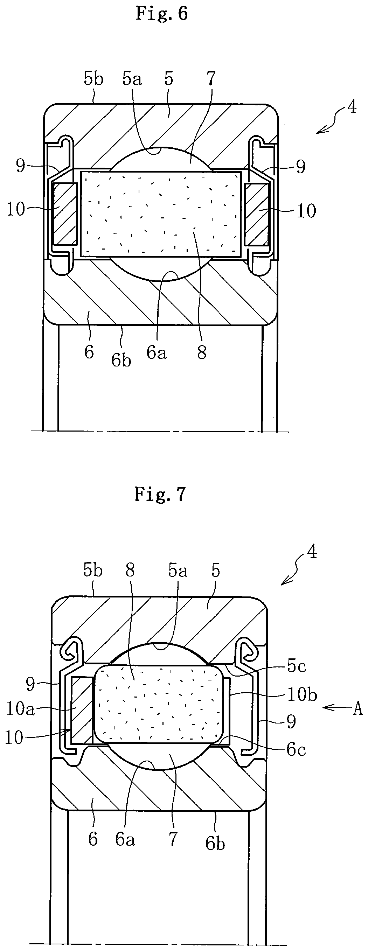

Fig. 5 is a front view illustrating a solid-lubrication rolling bearing 4 in accordance with a first embodiment (however, a shield plate 9 is removed), and Fig. 6 is a sectional view of the bearing taken along the radial direction. As illustrated in Fig. 5 and Fig. 6, the bearing 4 is shaped as a deep groove ball bearing, and includes, as main constituents, an outer ring 5 having an outer raceway face 5a on its inner circumferential face, an inner ring 6 having an inner raceway face 6a on its outer circumferential face, a plurality of (six in this embodiment) rolling elements 7 such as balls disposed between the outer raceway face 5a and the inner raceway face 6a, a plurality of (six in this embodiment) separators 8 disposed between the adjacent rolling elements 7, a sealing member 9 that seals a space between the outer ring 5 and the inner ring 6 on both axial sides, and lubrication rings 10 disposed between the sealing member 9 and the rolling elements 7. In the bearing 4 in this embodiment, the outer circumferential face 5b of the outer ring 5 becomes a rolling face that rolls on the guide rail 1 in Fig. 1, and an inner circumferential face 6b of the inner ring 6 fixedly engages with a fixed shaft 2a provided at the frame 2.

The sealing member 9 is formed of a shield plate, for example. An outer diameter end of the shield plate 9 is fixedly press-fitted into a circumferential groove in the inner circumferential face of the outer ring 5, and an inner diameter end of the shield plate 9 comes close to the outer circumferential face of the inner ring 6. This configuration forms a non-contact seal. A contact seal may be formed by bringing the inner diameter end of the sealing member 9 into slide contact with the outer circumferential face of the inner ring 6.

The outer ring 5, the inner ring 6, and the rolling elements 7 are made of steel, for example, martensitic stainless steels such as SUS440C. The rolling elements may be made of ceramics, and examples of the ceramics include silicon nitride. When the rolling elements 7 are not made of ceramics, the rolling elements 7 are preferably coated with a solid-lubrication material such as graphite. Preferably, the shield plate 9 is made of steel, for example, austenitic stainless steels such as SUS304 having excellent corrosion resistance.

In the configuration of the bearing, one of both of the separator 8 and the lubrication ring 10 is formed of the above-mentioned solid lubricant 11 (Fig. 1). The lubrication rings 10 may be omitted if unnecessary.

In the solid-lubrication rolling bearing 4 thus configured, during rotation of the bearing, the rotating and revolving rolling elements 7 slidingly contact the separators 8 and the lubrication rings 10, so that the separators 8 and the lubrication rings 10 are shaved to generate the solid lubricant powder. The solid lubricant powder is transferred and attached onto the outer raceway face 5a and the inner raceway face 6a. Therefore, the bearings 4 are stably lubricated without lubricating oil, grease, or the like. The separators 8 and the lubrication rings 10 are formed of the solid lubricant 11 having excellent wear resistance, thereby preventing their premature wear and keeping the lubricating effect of the solid lubricant 11 for a long period. During operation of the bearing, the separators 8 collide with the rolling elements 7 and may become thin due to wear. However, the solid lubricant 11 having excellent impact resistance can prevent a damage on the separators 8 due to such collision. Therefore, the life of the solid-lubrication rolling bearings 4 for the tenter clip can be extended.

### [SECOND EMBODIMENT]

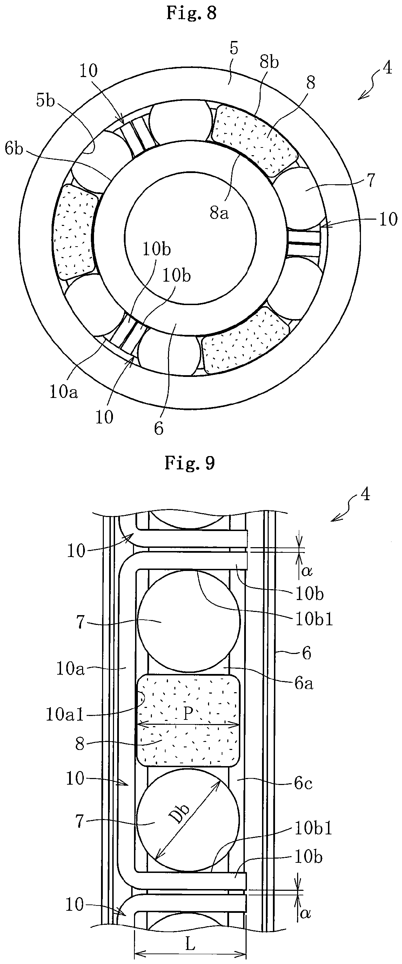

Fig. 7 is a sectional view illustrating a solid-lubrication rolling bearing 4 using the solid lubricant 11 in accordance with a second embodiment, and Fig. 8 is a front view of the bearing 4 in Fig. 7 when viewed from an A direction (however, the right shield plate 9 in Fig. 7 is removed). Basic configuration of the solid-lubrication rolling bearing 4 in the second embodiment is the same as that in the first embodiment. For this reason, in following description of the second embodiment, the same components as those in the bearings 4 in the first embodiment are given the same reference numerals and description thereof is omitted, and differences between this embodiment and the first embodiment will be mainly described.

The separators 8 are formed of the solid lubricant 11. The separators 8 in the first embodiment each are shaped like a rectangular parallelepiped, but the separators 8 in the second embodiment are partially cylindrical. The thickness of the separator 8 in the radial direction is slightly smaller than a difference between a radius of the inner circumferential face of the outer ring 5 (shoulder face 5c adjacent to the outer raceway face 5a) and a radius of the outer circumferential face of the inner ring 6 (shoulder face 6c adjacent to the inner raceway face 6a). An axial dimension of the separator 8 is larger than an axial dimension of the outer raceway face 5a and the inner raceway face 6a. Accordingly, during rotation of the bearing, the outer circumferential faces and the inner circumferential faces of the separators 8 at both axial ends can slidingly contact the shoulder faces 5c, 6c of the outer ring 5 and the inner ring 6.

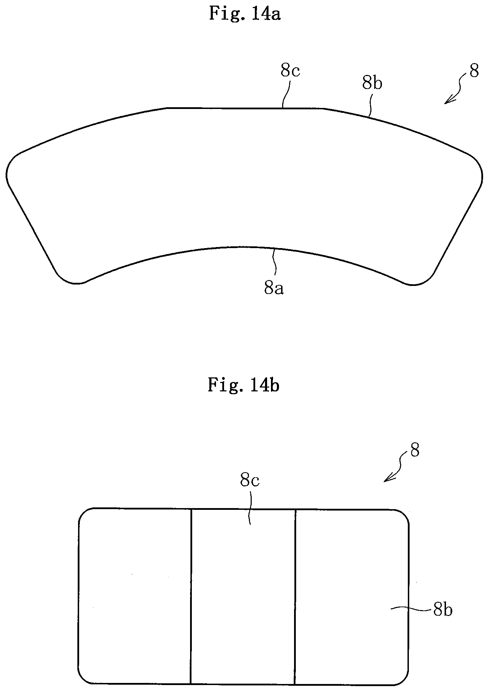

In Fig. 8, inner circumferential faces 8a (faces opposed to the outer circumferential face of the inner ring 6) and outer circumferential faces 8b (faces opposed to the inner circumferential face of the outer ring 5) of the separators 8 each are a cylindrical face using the axis as the center. However, as illustrated in Fig. 14a and Fig. 14b, a flat face 8c may be formed in a circumferential central region of the outer circumferential faces 8b of the separator 8.

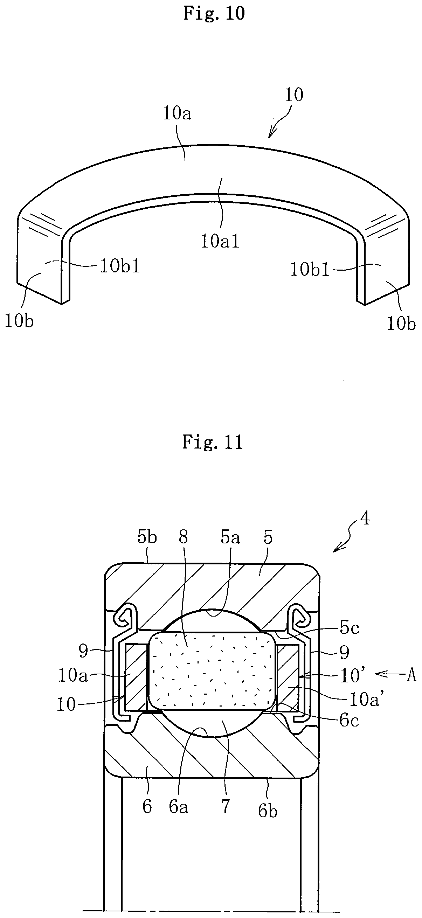

The solid-lubrication rolling bearings 4 in the second embodiment each further include, as a main constituent, restricting members 10 that hold the adjacent rolling element 7 and separator 8 from both circumferential sides to restrict relative movement of the rolling element 7 and separator 8 in a direction of separating apart in the circumferential direction. Configuration of the restricting members 10 will be described below in detail with respect to Fig. 9 and Fig. 10. Fig. 9 is a partial exploded view illustrating the solid-lubrication rolling bearing 4 in Fig. 8 when viewed from the outer diameter side, with the outer ring 5 being removed, and Fig. 10 is a perspective view illustrating the restricting member 10.

As illustrated in Fig. 9 and Fig. 10, the restricting members 10 each have a bottom portion 10a extending between the outer ring 5 and the inner ring 6 in the circumferential direction, and restricting portions 10b extending from both circumferential ends of the bottom portion 10a in a direction perpendicular to the face of the bottom portion 10a (axial direction), in an integral manner. All of inner side face 10a1 of the bottom portion 10a and the inner side faces 10b1 of the restricting portions 10, which are opposed to the rolling elements 7 and the separator 8, are flat faces having no curvature. As illustrated in Fig. 9, an axial length L of the restricting portion 10b (especially, inner side face 10b1) is slightly larger than a diameter Db of the rolling element 7 and an axial dimension P of the separator 8 (L > Db, L > P).

The restricting members 10 each have a thickness of about 0.1 mm to 1.0 mm (in Fig. 7 to Fig. 9, for clarity, the thickness of the restricting member 10 is exaggerated), and can be manufactured by pressing, for example, a metal thin plate. The restricting members 10 may be made of any material, for example, an iron-based material such as stainless steel, or iron-based material coated with chromium plating or the like for ensuring corrosion resistance. Alternatively, the restricting members 10 may be formed of the solid lubricant 11.

As illustrated in Fig. 7 and Fig. 8, the bottom portion 10a of the restricting member 10 is disposed between the inner circumferential face of the outer ring 5 and the outer circumferential face of the inner ring 6, and the restricting portions 10b are disposed in a space between the outer raceway face 5a of the outer ring 5 and the inner raceway face 6a of the inner ring 6. Specifically, the bottom portion 10a extends between the inner circumferential face of the outer ring 5 and the outer circumferential face of the inner ring 6 in the bearing circumferential direction, and is perpendicular to the rotational center of the bearing. The restricting portions 10b extend from both circumferential ends of the bottom portion 10a in the bearing axial direction, and cross the revolution track of the rolling element 7. At least one rolling element 7 and at least one separator 8 are disposed between the two restricting portions 10b of the restricting member 10. In this embodiment, the two rolling elements 7 are disposed between the two restricting portions 10b of the restricting member 10, and one separator 8 is disposed between the two rolling elements 7. That is, the two rolling elements 7 and one separator 7 are arranged as one set. A circumferential size of the inner side faces 10b1 of the two restricting portions 10b of the restricting member 10 is set such that the rolling elements 7 and the separator 8 between the inner side faces 10b1 can slightly move in the circumferential direction.

As illustrated in Fig. 8 and Fig. 9, the restricting members 10 are disposed at a plurality of (preferably, three or more) places in the circumferential direction. At this time, all of the restricting members 10 have the same shape. No rolling element 7 and separator 8 are disposed between the restricting portions 10b of the adjacent restricting members 10, and the restricting portions 10b are opposed to each other in the circumferential direction. Accordingly, all of the rolling elements 7 and the separators 8 are disposed between the restricting portions 10b of any restricting member 10. The adjacent restricting members 10 are not connected to each other, and as illustrated in Fig. 9, a circumferential minute gap α is present between the opposed restricting portions 10b of the adjacent restricting members 10.

A radial dimension of the restricting member 10 is slightly smaller than a difference between a radius of the shoulder face 5c of the outer ring 5 and a radius of the shoulder face 6c of the inner ring 6, and the outer diameter end and the inner diameter end of the bottom portion 10a are close to the inner circumferential face (shoulder face 5c) of the outer ring 5 and the outer circumferential face (shoulder face 6c) of the inner ring 6, respectively. In this embodiment, a gap between the inner diameter end of the bottom portion 10a and the shoulder face 6c of the inner ring 6 is smaller than a gap between the outer diameter end of the bottom portion 10a and the shoulder face 5c of the outer ring 5. The minute gap α between the adjacent restricting members 10 can be set such that the inner diameter end of the bottom portion 10a do not contact the outer circumferential face (shoulder face 6c) of the inner ring 6. However, the gap may be set such that the inner diameter end of the bottom portion 10a temporarily contacts the outer circumferential face (shoulder face 6c) of the inner ring 6 during rotation of the restricting member 10, if this causes no problem. Since the bottom portion 10a is thick in Fig. 7, the outer diameter end of the bottom portion 10a contacts the shield plate 9, and do not contact the inner circumferential face of the outer ring 5 (shoulder face 5c). However, thinning the bottom portion 10a may cause the outer diameter end of the bottom portion 10a to contact the inner circumferential face of the outer ring 5.

The restricting members 10 are assembled between the outer ring 5 and the inner ring 6 in the same orientation such that the bottom portions 10a are disposed on one axial side of the bearing. The restricting members 10 may be equally oriented, or may be partially turned (for example, alternatively turned). The restricting members 10 may be assembled in any stage before or after assembling the rolling elements 7 and the separators 8 between the outer ring 5 and the inner ring 6. Upon completion of assembling of the rolling elements 7, the separators 8, and the restricting members 10, the shield plate 9 is press-fitted into a circumferential groove of the outer ring 5 to complete the solid-lubrication rolling bearing 4 illustrated in Fig. 7. In this state, since the restricting members 10 are constrained by the sealing member 9 from the axial outer side, the restricting members 10 do not fall out of the bearing 4. To constrain movement of the restricting members 10 to the opening side (right side in Fig. 7), a ring-like member may be attached to the outer ring 5 (or the inner ring 6) and the member is disposed between the right shield plate 9 and a front end of the restricting portion 10a to contact the front end of the restricting portion 10a.

In the solid-lubrication rolling bearing 4 thus configured, during rotation of the bearing, the rotating and revolving rolling element 7 contact the separator 8, so that the separator 8 formed of the solid lubricant 11 are shaved to generate solid lubricant powder (including small pieces of the solid lubricant). The solid lubricant powder is transferred and attached onto the outer raceway face 5a and the inner raceway face 6a. Therefore, the bearing 4 are stably lubricated without lubricating oil, grease, or the like.

The separators 8 become smaller during operation of the bearing due to wear. In this case, however, since the moving range of each rolling element 7 in the circumferential direction is restricted by the restricting members 10, all of the rolling elements 7 are prevented from being unevenly distributed in a partial circumferential region. For this reason, the outer ring 5 is not separated from the inner ring 6 after long-tern operation, thereby preventing unintended disassembling of the bearing. When three or more restricting members 10 are used as in this embodiment, the situation where all of the rolling elements 7 move in a region of 180 degrees or less never occurs theoretically. Thus, the above trouble can be reliably prevented.

From the above configuration, the restricting members 10 can relatively move in all directions (axial direction, circumferential direction, and radial direction). Consequently, even in an initial stage (wear of the separators 8 does not worsen), dimension of gaps between the rolling element 7, and the inner side faces 10a1, 10b1 of the restricting member 10 can be flexibly changed. Thus, discharging of the solid lubricant powder accumulated in the gaps can be promoted, so that the solid lubricant powder is prevented from filling the gaps to cause rotational locking. The effect of promoting discharging of the solid lubricant powder from the gaps can be further enhanced by forming the inner side face 10a1 of the bottom portion 10a and the inner side faces 10b1 of the restricting portions 10b as flat faces having no curvature, as illustrated in Fig. 9.

In some conventional solid-lubrication rolling bearings, a retainer holds the separator and the rolling elements with rivets. On the contrary, according to the present invention, since a connecting member such as the rivet is unnecessary, there is no need to ensure a set-up space for the connecting member in the circumferential direction. Thus, many rolling elements 7 can be incorporated in the bearing to increase the basic rated load of the bearing. Further, the operation of connecting the restricting members 10 to each other becomes unnecessary, so that man-hour at assembling of the bearing can be reduced to achieve cost reduction.

Further, since the outer diameter end and the inner diameter end of the bottom portion 10a of the restricting members 10 are made close to the inner circumferential face of the outer ring 5 and the outer circumferential face of the inner ring 6, the bottom portion 10a can shield the solid lubricant powder generated by contact between the rolling elements 7 and the separators 8 to keep the solid lubricant powder near the raceway faces 5a, 6a. Thus, leakage (especially, leakage to the left in Fig. 7) of the solid lubricant powder to the outside of the bearing can be reliably prevented.

Since the restricting members 10 have the same shape, processing costs of the restricting members 10 can be reduced, so that costs of the solid-lubrication rolling bearings 4 can be further reduced.

### [THIRD EMBODIMENT]

Next, a solid-lubrication rolling bearing in accordance with a third embodiment of the present invention will be described with reference to Fig. 11 to Fig. 13.

In the second embodiment, the restricting members are disposed on one axial side of the rolling elements 7 and the separators 8. In the third embodiment, a pair of restricting members 10, 10' of the same shape sandwich the rolling elements 7 and the separators 8 on both axial sides. In the third embodiment, portions of the restricting members 10' on the other axial side, out of the pair of restricting members 10, 10', which correspond to portions of the restricting members 10 on one axial side, are given common reference numerals followed by symbol (').

In the third embodiment, in the pair of restricting members 10, 10', the bottom portion 10a, 10a' are opposed to each other in the axial direction, and the restricting portions 10b, 10b' are opposed to each other in the circumferential direction. The pair of restricting members 10, 10' are not connected to each other. The same number of rolling elements 7 and separator 8 as the rolling elements 7 and separator 8 in the first embodiment are stored in a space surrounded with inner side faces 10a1, 10a1' of the bottom portions 10a, 10a', the inner side faces 10b1 of the restricting portions 10b of the restricting member 10 one axial side, and inner side faces 10b1' of the restricting portions 10b' of the restricting member 10' on the other axial side. The separators 8 are made of the solid lubricant 11. An axial length L of each of the restricting portions 10b, 10b' (a minimum axial distance between the inner side faces 10a1, 10a1' of the opposed bottom portion 10a, 10a') is slightly larger than a diameter Db of the rolling element 7 and an axial dimension P of the separator 8 (L > Db, L > P), such that front ends of the restricting portions 10b, 10b' can contact the bottom portions 10a', 10a of the corresponding restricting members.

In the bearing 4 in this embodiment, the pair of restricting members 10, 10', the rolling elements 7, and the separator 8 are used as one unit, and the units are disposed at a plurality of places (three places in the figure) in the circumferential direction. The minute gap α being the same as the first embodiment is formed between the adjacent units in the circumferential direction.

The configuration in the third embodiment can achieve the same effect as the configuration in the second embodiment. The restricting members 10, 10' are prevented from falling off by shield plates 9 on both axial sides. With the configuration in the third embodiment, since the bottom portion 10a, 10a' are disposed on the both axial sides of the rolling elements 7 and the separator 8, leakage of the solid lubricant powder to both axial sides can be suppressed, thereby preventing leakage of the solid lubricant to the outside of the bearing more reliably. Although the restricting portions 10b, 10b' of the pair of restricting members 10, 10' are loosely engaged with each other, the restricting portions 10b, 10b' may be tightly engaged with each other to integrate the unit.

### [FOURTH EMBODIMENT]

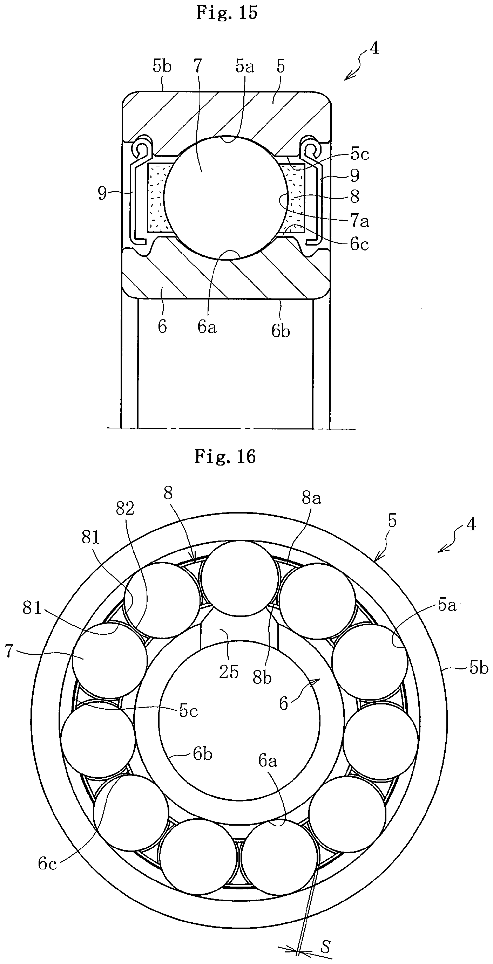

Fig. 15 is an axial sectional view illustrating a solid-lubrication rolling bearing 4 in accordance with a fourth embodiment, and Fig. 16 is a radial sectional view illustrating the solid-lubrication rolling bearing.

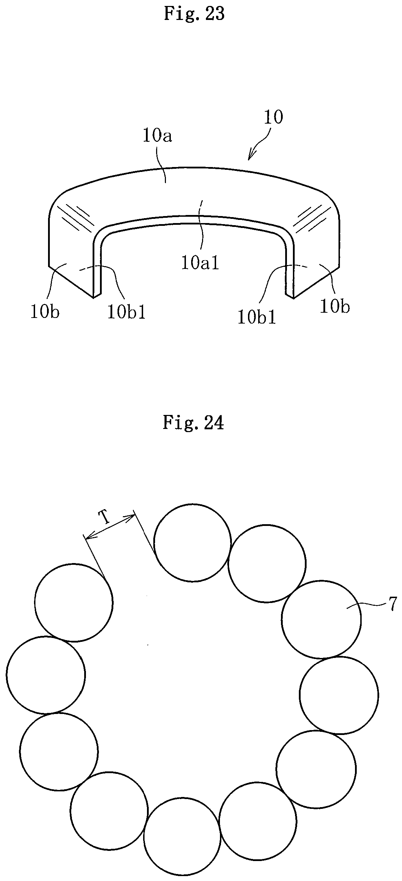

In the fourth embodiment, rolling elements 7 are disposed as full complement rolling elements. Thus, the bearing 4 has no retainer that holds the rolling elements 7 at regular intervals in the circumferential direction. The full complement rolling elements mean that, as illustrated in Fig. 24, a total T of gaps between the rolling elements 7 does not exceed the diameter of the rolling element 7.

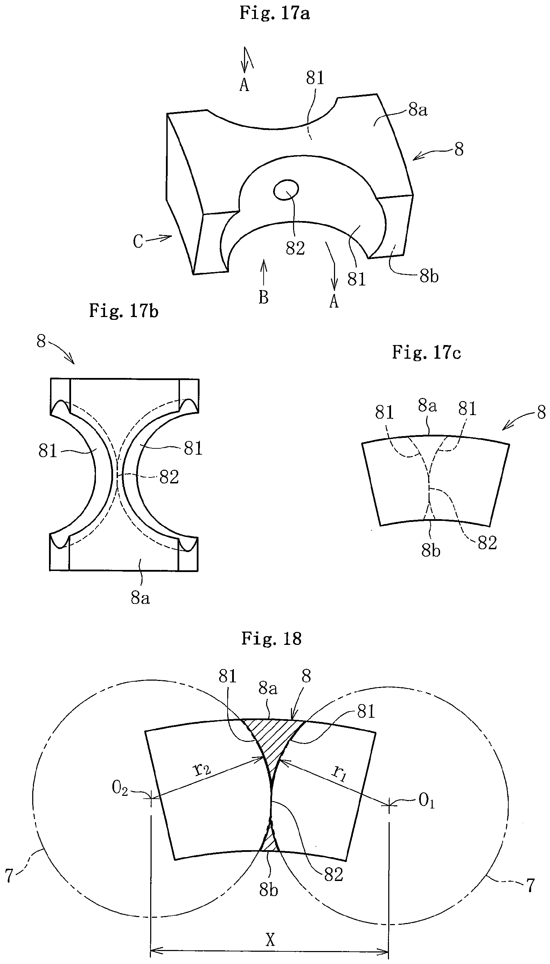

Also in the fourth embodiment, the separators 8 are formed of the solid lubricant 11. Fig. 17a to Fig. 17c each illustrate an example of the shape of the separator 8. Fig. 17a is a perspective view illustrating the separator 8 when viewed from the outer diameter side. Fig. 17b is a view illustrating the separator 8 when viewed from a direction of an arrow B in Fig. 17a (inner diameter side), and Fig. 17c is a view illustrating the separator 8 when viewed from a direction of an arrow C in Fig. 17a (axial direction).

As illustrated in Fig. 17a to Fig. 17c, receiving faces 81 that can make surface-contact with the faces of the rolling elements 7 are formed on both circumferential sides of the separator 8. In this embodiment, since a ball is used as the rolling element 7, the receiving faces 81 are partial recessed spherical faces that make contact with the faces of the balls 7. As illustrated in Fig. 18, a distance X between a curvature center O1 of one receiving face 81 and a curvature center O2 of the other receiving face 81 is slightly smaller than a sum of a curvature radius r1 of one receiving face 81 and a curvature radius r2 of the other receiving face 81 (X < r1 + r2). That is, on a plane orthogonal to the axial direction including the curvature centers O1, O2 (plane along the sheet of Fig. 18), an arc including a generating line of one receiving face 81 crosses an arc including a generating line of the other receiving face 81. Thus, an opening 82 opened to the receiving faces 81 on both sides is formed at the deepest part of the receiving faces 81, at which the two arcs cross each other. Preferably, an edge of the opening 82 is rounded by machining so as not to be sharp.

The outer circumferential face 8a (face opposed to the inner circumferential face of the outer ring 5) and the inner circumferential faces 8b (face opposed to the outer circumferential face of the inner ring 6) of the separator 8 each are cylindrical about the axis. As illustrated in Fig. 17c and Fig. 18, on the plane orthogonal to the axial direction including the curvature centers O1, O2 of the receiving faces 81, a circumferential length of the outer circumferential face 8a of the separator 8 is larger than a circumferential length of the inner circumferential face 8b. As illustrated in Fig. 15, the thickness of the separator 8 in the radial direction is slightly smaller than a difference between a radius of the inner circumferential face (shoulder face 5c adjacent to the outer raceway face 5a) of the outer ring 5 and a radius of the outer circumferential face (shoulder face 6c adjacent to the inner raceway face 6a) of the inner ring 6. The axial dimension of the separator 8 is larger than the axial dimension of the outer raceway face 5a and the inner raceway face 6a.

The above-mentioned solid-lubrication rolling bearing 4 is assembled by assembling a plurality of rolling elements 7 and separators 8 between the outer ring 5 and the inner ring 6, and fixedly press-fitting the sealing member 9 into a circumferential groove of the outer ring 5. At this time, as illustrated in Fig. 16, the rolling elements 7 and the separators 8 are alternately disposed in the circumferential direction. In the state where all of the rolling elements 7 and the separators 8 are assembled, a circumferential minute gap S is generated between the face of the rolling element 7 and the receiving face 81 of the separator 8. To smoothly assemble the rolling elements 7, a receiving hole 25 is preferably provided in the inner ring 6. The receiving hole 25 may be formed in the outer ring 5.

In the solid-lubrication rolling bearings 4 thus configured, during rotation of the bearing, the face of the rolling element 7 contacts the receiving faces 81 of the separator 8, so that the separator 8 is shaved to generate solid lubricant powder (including small pieces of the solid lubricant). The solid lubricant powder is transferred and attached onto the outer raceway face 5a and the inner raceway face 6a, so that the bearing 4 is stably lubricated without lubricating oil, grease, or the like.

During long-term operation of the bearing 4, the separators 8 gradually become smaller due to wear and accordingly, the circumferential gap S between the rolling element 7 and the separator 8 gradually becomes larger. However, since the bearing 4 has no retainer, and the rolling elements 7 are full complement rolling elements, even when the separators 8 become thin, all of the rolling elements are prevented from being unevenly distributed in a circumferential limited region (circumferential region of 180 degrees or less). For this reason, even after long-tern operation, the outer ring 5 is not separated from the inner ring 6, thereby preventing unintended disassembling of the bearing 4. Many rolling elements 7 can be incorporated into the bearing to increase the basic rated load of the bearing 4.

As the separators 8 become thinner, the adjacent rolling elements 7 get close to each other at higher speed. In this case, as illustrated in Fig. 18, the rolling elements 7 collide with each other before the rolling elements 7 contact the receiving faces 81 of the separator 8. For this reason, the contact pressure between the faces of the rolling elements 7 and the receiving faces 81 of the separator 8 is reduced to decrease shock on the separator 8. This can prevent damage on the separator 8 due to collision between the rolling elements 7 and the separators 8 to increase the life of the bearing.

In the solid-lubrication rolling bearing 4 in this embodiment, the receiving faces 81 of the separators 8 are partial recessed spherical faces that engage with the faces of the respective rolling elements 7. Thus, position and posture of the separators 8 during operation of the bearing can be stabilized to prevent noises caused by oscillation of the separators 8.

As apparent from Fig. 17a to Fig. 17c, since the separators 8 of the present invention are thin, the separators 8 formed of the existing solid lubricant may lack strength. On the contrary, the separators 8 formed of the solid lubricant 11 having excellent impact resistance have high strength, so that damage on the separators 8 can be reliably prevented. Since the solid lubricant 11 has high sliding resistance, premature wear of the separators 8 can be prevented to keep the lubricating effect of the solid lubricant powder. Therefore, the life of the solid-lubrication rolling bearings 4 can be further extended. The solid lubricant 11 is harder than the conventional solid lubricant and thus, can be formed into a complicated shape illustrated in Fig. 17a to Fig. 17c by machining such as lathe turning after firing.

### [FIFTH EMBODIMENT]

In the fourth embodiment, the solid-lubrication rolling bearings 4 are illustrated as full complement rolling elements without retainer. However, the restricting members 10 in the second embodiment can hold the rolling elements 7 and the separators 8 in the fourth embodiment (Fig. 17a to Fig. 17c).

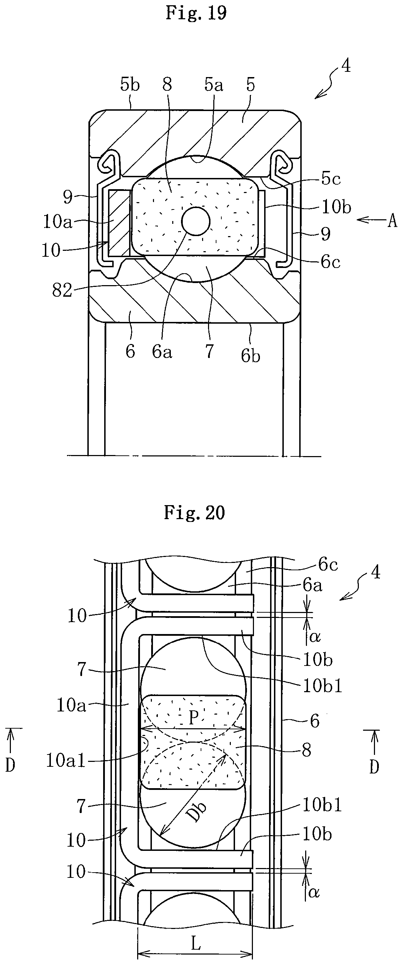

Fig. 19, Fig. 20, and Fig. 23 illustrate a fifth embodiment. Fig. 20 is a partial exploded view illustrating the solid-lubrication bearing 4 when viewed from the outer diameter side, with an outer ring 5 and a sealing member 9 being removed, and Fig. 19 is a sectional view taken along D-D in Fig. 20. Fig. 23 is a perspective view illustrating a restricting member 10.

In the solid-lubrication rolling bearing 4 in the fifth embodiment, as described above, the separators in the fourth embodiment (Fig. 17a to Fig. 17c) are used as the separators 8. The separators 8 are formed of the above-mentioned solid lubricant 11 (Fig. 1). Since the adjacent rolling elements 7 can contact each other via the separator 8, and a pitch of the adjacent rolling elements 7 is smaller than the pitch in the second embodiment, as illustrated in Fig. 23, a circumferential length of the bottom portion 10a of the restricting member 10 is smaller than the circumferential direction of the bottom portion 10a of the restricting members 10 in the second embodiment (Fig. 10). Other configuration in the fifth embodiment is the same as that in the second embodiment and thus, the same members and elements in the fifth embodiment as those in the second embodiment are given the same reference numerals and redundant description is omitted.

### [SIXTH EMBODIMENT]

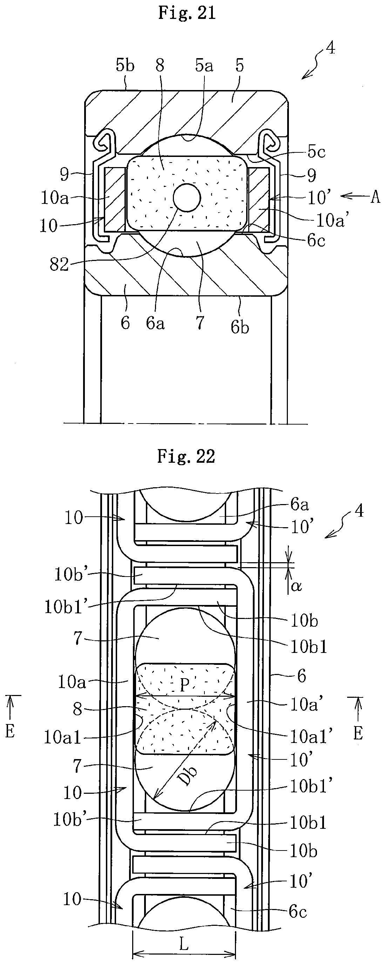

A sixth embodiment will be described with reference to Fig. 21 to Fig. 23. Fig. 22 is a partial exploded view illustrating a solid lubrication bearing 4 when viewed from the outer diameter side, with an outer ring 5 and a sealing member 9 being removed, and Fig. 21 is a sectional view taken along E-E in Fig. 22.

In the sixth embodiment, the separators 8 in the fourth embodiment (Fig. 17a to Fig. 17c), are used, and as in the third embodiment, a pair of restricting members 10, 10' of the same shape are disposed on both axial sides of the rolling elements 7 and the separators 8. The separators 8 are made of the solid lubricant 11 (Fig. 1). Other configuration in the sixth embodiment is the same as that in the third embodiment and thus, the same members and elements in the sixth embodiment as those in the third embodiment are given the same reference numerals and redundant description is omitted.

In the description of the embodiments, the solid lubricant 11 is applied to the rolling bearing that is the deep groove ball bearing. However, the solid lubricant 11 can be applied to other types of bearings including angular contact ball bearings, cylindrical roller bearings, and tapered roller bearing. The present invention can be applied to the outer-ring rotating rolling bearings as well as inner-ring rotating rolling bearings.

The solid lubricant of the present invention is described to be used for the tenter clip bearing of the film stretching machine; however, it is not limited thereto. The solid lubricant can be applied to various bearings used at elevated temperatures or in a vacuum, which prevents use of grease or lubricating oil as the lubricant. As a matter of course, the solid lubricant 11 also can be applied to any equipment and mechanical parts used in similar atmospheres, other than bearings.

### REFERENCE SIGNS LIST

- 1:: Guide rail
- 2:: Frame
- 3:: Clip
- 4:: Solid-lubrication rolling bearing
- 5:: Outer ring
- 5a:: Outer raceway face
- 6:: Inner ring
- 6a:: Inner raceway face
- 7:: Rolling element (ball)
- 8:: Separator
- 9:: Sealing member (shield plate)
- 10:: Lubrication ring
- 11:: Solid lubricant
- 12:: Carbon material particle
- 12':: Carbon material powder
- 13:: Graphite particle
- 13':: Graphite powder
- 14:: Binder component
- 14':: Binder
- 15:: Pores

## Claims

1. A solid-lubrication rolling bearing (4) comprising:
an outer ring (5) having an outer raceway face (5a);
an inner ring (6) having an inner raceway face (6a);
a plurality of rolling elements (7) disposed between the outer raceway face (5a) and the inner raceway face (6a); and
a separator (8) disposed between the adjacent rolling elements (7), the separator (8) being formed of a solid lubricant (11),
the solid lubricant (11) being configured to lubricate the bearing (4) without lubricating oil or grease, and being configured to generate solid lubricant powder in that during rotation of the bearing (4), the rotating and revolving rolling elements slidingly contact the separators (8), so that the separators (8) are shaved, thereby generating the solid lubricant powder,
the solid lubricant (11) being formed by molding and firing powder that includes amorphous and self-sintering carbon material powder (12'), graphite powder (13'), and a binder (14'),
**characterised in that** through the firing under inert gas at temperatures of 900°C to 1000°C in an oven the carbon material powder (12') becomes amorphous carbon material particles (12), the graphite powder (13') becomes crystalline graphite particles (13), and the binder (14') becomes amorphous carbon (14), wherein the carbon material particles (12) function as a base material and are combined with each other to form the skeleton structure,
the weight ratio of the carbon material powder (12') being the highest among the carbon material powder (12'), the graphite powder (13') and the binder (14').

2. The solid lubrication rolling bearing (4) according to claim 1, wherein
a combination ratio of the carbon material powder is larger than a combination ratio of the graphite powder in weight ratio.

3. The solid-lubrication rolling bearing (4) according to claim 2, wherein
the carbon material powder of 50 to 60 wt% and the graphite powder of 25 to 40 wt% are contained.

4. The solid-lubrication rolling bearing (4) according to claim 1, wherein
the carbon material powder and the graphite powder are granulated using the binder, and the granulated powder is molded and sintered.

5. The solid-lubrication rolling bearing (4) according to claim 1, wherein
at least one of W, Mo, and MoS₂ is added to the solid lubricant (11).

6. The solid-lubrication rolling bearing (4) according to claim 1, wherein
carbon fiber or carbon nanotube is added to the solid lubricant (11).

7. The solid-lubrication rolling bearing (4) according to claim 1, wherein
the bending strength of the solid lubricant (11) is set to 40 to 100 MPa, and the Shore hardness (HSC) of the solid lubricant (11) is set to 50 to 100.

8. The solid-lubrication rolling bearing (4) according to claim 1, wherein the
specific wear rate of the solid lubricant (11) is set to 1.0 to 2.5 × 10-7 mm³/(N•m).

9. The solid-lubrication rolling bearing (4) according to claim 1, wherein
the density of the solid lubricant (11) is set to 1.0 to 3.0 g/cm3.

10. The solid-lubrication rolling bearing (4)
according to any one of claims 1 to 9, wherein
relative movement of the adjacent rolling elements (7) and the separator (8) in a direction of separating apart in a circumferential direction is restricted by restricting members, and
the restricting members are disposed at a plurality of places in the circumferential direction to allow relative movement between the adjacent restricting members.

11. The solid-lubrication rolling bearing (4) according to claim 10, wherein
a pair of the restricting members are disposed on both axial sides of the rolling element (7) and the separator (8), and
the pair of restricting members, and the rolling element (7) and the separator (8) that are accommodated within the restricting members are regarded as one unit, and the units are disposed at a plurality of places in the circumferential direction to allow relative movement between the units.

12. The solid-lubrication rolling bearing (4) according to any one of claims 1 to 9, wherein
the separator (8) disposed between the adjacent rolling elements (7) allows contact between the adjacent rolling elements (7).

13. The solid-lubrication rolling bearing (4) according to claim 12, wherein
the separator (8) has receiving faces that are disposed on both circumferential sides, and contact the respective rolling elements (7), and an opening opened to the both receiving faces, and the adjacent rolling elements (7) are brought into contact with each other via the opening.

14. The solid-lubrication rolling bearing (4) according to claim 13, wherein
the receiving faces of the separator (8) each are shaped to make surface-contact with the rolling elements (7).

15. The solid-lubrication rolling bearing (4) according to any one of claims 10 to 14, used in a tenter clip of a film stretching machine.

## Patentansprüche

1. Wälzlager (4) mit Festschmierung, umfassend:
einen Außenring (5) mit einer Rollbahn-Außenfläche (5a);
einen Innenring (6) mit einer Rollbahn-Innenfläche (6a);
eine Vielzahl von Wälzelementen (7), die zwischen der Rollbahn-Außenfläche (5a) und der Rollbahn-Innenfläche (6a) angeordnet sind; und
einen Separator (8), der zwischen den benachbarten Wälzelementen (7) angeordnet ist, wobei der Separator (8) aus einem Festschmierstoff (11) gebildet ist,
wobei der Festschmierstoff (11) dazu konfiguriert ist, das Lager (4) ohne Schmieröl oder -fett zu schmieren, und dazu konfiguriert ist, ein Festschmierstoffpulver zu erzeugen, so dass während einer Drehung des Lagers (4) die sich drehenden und revolvierenden Wälzelemente die Separatoren (8) gleitend berühren, so dass die Separatoren (8) abgeschabt werden, wodurch das Festschmierstoffpulver erzeugt wird,
wobei der Festschmierstoff (11) durch Formen und Brennen eines Pulvers ausgebildet wird, das ein amorphes und selbstsinterndes Kohlenstoffmaterialpulver (12'), Graphitpulver (13') und ein Bindemittel (14') beinhaltet,
**dadurch gekennzeichnet, dass**
durch das Brennen unter Inertgas bei Temperaturen von 900 °C bis 1000 °C in einem Ofen das Kohlenstoffmaterialpulver (12') zu amorphen Kohlenstoffmaterialteilchen (12) wird, das Graphitpulver (13') zu kristallinen Graphitteilchen (13) wird und das Bindemittel (14') zu amorphem Kohlenstoff (14) wird, wobei die Kohlenstoffmaterialteilchen (12) als ein Basismaterial dienen und mit den anderen kombiniert werden, um die Skelettstruktur auszubilden,
wobei der Gewichtsanteil des Kohlenstoffmaterialpulvers (12') unter dem Kohlenstoffmaterialpulver (12'), dem Graphitpulver (13') und dem Bindemittel (14') der Höchste ist.

2. Wälzlager (4) mit Festschmierung nach Anspruch 1, wobei ein Kombinationsverhältnis des Kohlenstoffmaterialpulvers größer ist als ein Kombinationsverhältnis des Graphitpulvers in Bezug auf den Gewichtsanteil.

3. Wälzlager (4) mit Festschmierung nach Anspruch 2, wobei
das Kohlenstoffmaterialpulver mit 50 bis 60 Gew.-% und das Graphitpulver mit 25 bis 40 Gew.-% enthalten sind.

4. Wälzlager (4) mit Festschmierung nach Anspruch 1, wobei
das Kohlenstoffmaterialpulver und das Graphitpulver unter Verwendung des Bindemittels granuliert sind und das granulierte Pulver geformt und gesintert ist.

5. Wälzlager (4) mit Festschmierung nach Anspruch 1, wobei
dem Festschmierstoff (11) mindestens eins von W, Mo und MoS₂ zugesetzt ist.

6. Wälzlager (4) mit Festschmierung nach Anspruch 1, wobei
dem Festschmierstoff (11) Kohlenstofffasern oder Kohlenstoffnanoröhrchen zugesetzt sind.

7. Wälzlager (4) mit Festschmierung nach Anspruch 1, wobei
die Biegefestigkeit des Festschmierstoffs (11) auf 40 bis 100 MPa festgelegt ist und die Shore-Härte des Festschmierstoffs (11) auf 50 bis 100 festgelegt ist.

8. Wälzlager (4) mit Festschmierung nach Anspruch 1, wobei
die spezifische Verschleißrate des Festschmierstoffs (11) auf 1,0 bis 2,5 x 10⁻⁷ mm³/(Nm) festgelegt ist.

9. Wälzlager (4) mit Festschmierung nach Anspruch 1, wobei
die Dichte des Festschmierstoffs (11) auf 1,0 bis 3,0 g/cm³ festgelegt ist.

10. Wälzlager (4) mit Festschmierung nach einem der Ansprüche 1 bis 9, wobei
eine relative Bewegung der benachbarten Wälzelemente (7) und des Separators (8) in eine Richtung des Voneinandertrennens in einer Umfangsrichtung durch Beschränkungsglieder beschränkt wird, und
Beschränkungsglieder an einer Vielzahl von Stellen in der Umfangsrichtung angeordnet sind, um eine relative Bewegung zwischen den benachbarten Beschränkungsgliedern zu ermöglichen.

11. Wälzlager (4) mit Festschmierung nach Anspruch 10, wobei
ein Paar der Beschränkungsglieder an beiden axialen Seiten des Wälzelements (7) und des Separators (8) angeordnet ist, und
das Paar der Beschränkungsglieder sowie das Wälzelement (7) und der Separator (8), die innerhalb der Beschränkungsglieder untergebracht sind, als eine Einheit betrachtet werden, und wobei die Einheiten an einer Vielzahl von Stellen in der Umfangsrichtung angeordnet sind, um eine relative Bewegung zwischen den Einheiten zu ermöglichen.

12. Wälzlager (4) mit Festschmierung nach einem der Ansprüche 1 bis 9, wobei
der Separator (8), der zwischen den benachbarten Wälzelementen (7) angeordnet ist, Kontakt zwischen den benachbarten Wälzelementen (7) ermöglicht.

13. Wälzlager (4) mit Festschmierung nach Anspruch 12, wobei
der Separator (8) Aufnahmeflächen, die an beiden Umfangsseiten angeordnet sind und die entsprechenden Wälzelemente (7) berühren, und eine Öffnung aufweist, die in Richtung der beiden Aufnahmeflächen offen ist, und wobei die benachbarten Wälzelemente (7) über die Öffnung in Kontakt miteinander gebracht werden.

14. Wälzlager (4) mit Festschmierung nach Anspruch 13, wobei
die Aufnahmeflächen des Separators (8) jeweils so geformt sind, dass sie einen Oberflächenkontakt mit den Wälzelementen (7) herstellen.

15. Wälzlager (4) mit Festschmierung nach einem der Ansprüche 10 bis 14, das in einer Spannkluppe einer Folienstreckmaschine verwendet wird.

## Revendications

1. Palier à roulement à lubrification solide (4) comprenant :
une bague extérieure (5) ayant une face de chemin de roulement extérieure (5a) ;
une bague intérieure (6) ayant une face de chemin de roulement intérieure (6a) ;
une pluralité d'éléments de roulement (7) disposés entre la face de chemin de roulement extérieure (5a) et la face de chemin de roulement intérieure (6a) ; et
un séparateur (8) disposé entre les éléments de roulement adjacents (7), le séparateur (8) étant formé d'un lubrifiant solide (11),
le lubrifiant solide (11) étant conçu pour lubrifier le roulement (4) sans huile ni graisse lubrifiante, et étant conçu pour générer de la poudre lubrifiante solide de sorte que pendant la rotation du palier (4), les éléments de roulement rotatifs et tournants entrent en contact par glissement avec les séparateurs (8), de sorte que les séparateurs (8) sont fraisés, générant ainsi la poudre lubrifiante solide,
le lubrifiant solide (11) étant formé par moulage et cuisson de poudre qui comporte de la poudre de matériau carboné amorphe et auto-frittant (12'), de la poudre de graphite (13') et un liant (14'),
**caractérisé en ce que** par la cuisson sous gaz inerte à des températures de 900 °C à 1 000 °C dans un four, la poudre de matériau carboné (12') devient des particules de matériau carboné amorphe (12), la poudre de graphite (13') devient des particules de graphite cristallines (13), et le liant (14') devient du carbone amorphe (14), dans lequel les particules de matériau carboné (12) fonctionnent comme un matériau de base et sont combinées entre elles pour former l'ossature,
le rapport pondéral de la poudre de matériau carboné (12') étant le plus élevé parmi la poudre de matériau carboné (12'), la poudre de graphite (13') et le liant (14').

2. Palier à roulement à lubrification solide (4) selon la revendication 1, dans lequel
un rapport de combinaison de la poudre de matériau carboné est supérieur à un rapport de combinaison de la poudre de graphite en rapport pondéral.

3. Palier à roulement à lubrification solide (4) selon la revendication 2, dans lequel
la poudre de matériau carboné de 50 à 60 % en poids et la poudre de graphite de 25 à 40 % en poids sont contenues.

4. Palier à roulement à lubrification solide (4) selon la revendication 1, dans lequel
la poudre de matériau carboné et la poudre de graphite sont granulées à l'aide du liant, et la poudre granulée est moulée et frittée.

5. Palier à roulement à lubrification solide (4) selon la revendication 1, dans lequel
W et/ou Mo et/ou MoS₂ est/sont ajouté(s) au lubrifiant solide (11).

6. Palier à roulement à lubrification solide (4) selon la revendication 1, dans lequel
une fibre de carbone ou un nanotube de carbone est ajouté(e) au lubrifiant solide (11).

7. Palier à roulement à lubrification solide (4) selon la revendication 1, dans lequel
la résistance à la flexion du lubrifiant solide (11) est établie entre 40 et 100 MPa, et la dureté Shore (HSC) du lubrifiant solide (11) est établie entre 50 et 100.

8. Palier à roulement à lubrification solide (4) selon la revendication 1, dans lequel
le taux d'usure spécifique du lubrifiant solide (11) est établi entre 1,0 et 2,5 x 10⁻⁷ mm³/(N•m).

9. Palier à roulement à lubrification solide (4) selon la revendication 1, dans lequel
la densité du lubrifiant solide (11) est établie entre 1,0 et 3,0 g/cm³.

10. Palier à roulement à lubrification solide (4)
selon l'une quelconque des revendications 1 à 9, dans lequel
le mouvement relatif des éléments de roulement adjacents (7) et du séparateur (8) dans une direction de séparation dans une direction circonférentielle est limité par des organes de restriction, et
les organes de restriction sont disposés en une pluralité d'endroits dans la direction circonférentielle afin de permettre un mouvement relatif entre les organes de restriction adjacents.

11. Palier à roulement à lubrification solide (4) selon la revendication 10, dans lequel
une paire d'organes de restriction est disposée des deux côtés axiaux de l'élément de roulement (7) et du séparateur (8), et
la paire d'organes de restriction, l'élément de roulement (7) et le séparateur (8) qui sont logés à l'intérieur des organes de restriction sont considérés comme une seule unité, et les unités sont disposées à une pluralité d'endroits dans la direction circonférentielle afin de permettre un mouvement relatif entre les unités.

12. Palier à roulement à lubrification solide (4) selon l'une quelconque des revendications 1 à 9, dans lequel
le séparateur (8) disposé entre les éléments de roulement adjacents (7) permet un contact entre les éléments de roulement adjacents (7).

13. Palier à roulement à lubrification solide (4) selon la revendication 12, dans lequel
le séparateur (8) présente des faces de réception qui sont disposées sur les deux côtés circonférentiels, et entrent en contact avec les éléments de roulement respectifs (7), ainsi qu'une ouverture ouverte sur les deux faces de réception, et les éléments de roulement adjacents (7) sont mis en contact les uns avec les autres par l'intermédiaire de l'ouverture.

14. Palier à roulement à lubrification solide (4) selon la revendication 13, dans lequel
les faces de réception du séparateur (8) sont chacune formées pour établir un contact de surface avec les éléments de roulement (7).

15. Palier à roulement à lubrification solide (4) selon l'une quelconque des revendications 10 à 14, utilisé dans une pince de rame d'une machine d'étirage de film.
